# EUROPEAN PATENT APPLICATION

(11) **EP 4 079 512 A1**
(43) Date of publication of application: **26.10.2022**
(21) Application number: 22168091.1
(22) Date of filing: 13.04.2022
(51) Int. Cl.: B32B 7/027, B32B 5/02, B32B 5/18, B32B 27/06, B32B 27/12, B32B 27/38, E06B 1/00

(54) **MULTILAYER ITEM FOR THERMAL INSULATION OF AN OPENING OF A WINDOW FRAME OF A BUILDING**

(30) Priority: 20.04.2021 IT 202100010028
(71) Applicant: Coprimuro S.r.l., 47853 Coriano (RN) (IT)
(72) Inventor: SILVA, RAFAEL ENRIQUE, 47843 MISANO ADRIATICO (RN) (IT)
(74) Representative: Baldi, Claudio

(57) **Abstract**

A multilayer item (M) for thermal insulation of a wall; the multilayer item (M) comprises a base package (B1) comprising a polyurethane panel (1) comprising a first side (1a) and a second side (1b), a fiber sheet (2) comprising a first side (2a) and a second side (2b) facing the polyurethane panel (1), an intermediate resin layer (30) interposed between the first side (1a) of the polyurethane panel (1) and the second side (2a) of the fiber sheet (2) to connect the polyurethane panel (1) and the fiber sheet (2), a first resin layer (31) applied on the first side (2a) of the fiber sheet (2), a second resin layer (32) applied on the second side (1b) of the polyurethane panel (1); the peculiarity of the item is that at least one of said resin layers (30, 31, 32) comprises marble dust.

## Description

The present invention relates to a multilayer item for the thermal insulation of an opening of a window frame of a building.

Although reference will be made to window frames, the invention is also extended to door frames.

The reference sector is that of thermal insulation in buildings, and more precisely that of restructuring and energy requalification works.

In order to insulate the internal space from the external space of a building, cladding is applied on the external surface of the building walls. Nevertheless, the cladding does not affect the opening where the windows and doors are mounted.

A window or door opening comprises a sill or a threshold and walls that define an intrados of the opening. Especially if it is made of marble, the sill or threshold generates a thermal bridge with heat transmission from the outside to the inside of the building in the hot season, and heat loss from the inside to the outside of the building in the cold season. Moreover, such a heat transmission on the sill generates mold where bacteria can proliferate, creating an aesthetic damage and causing a health hazard. Said thermal bridges are also generated in correspondence of the intrados, causing the transmission and dispersion of heat, as well as condensation and mold at the corners of the intrados.

Therefore, the thermal bridges generated in the sills and in the intrados of the opening of window or door frames make the cladding ineffective.

In the prior art the thermal bridges are eliminated in a different way whether it is the sill or threshold or the intrados..

With regard to the sill or threshold, the thermal bridge is eliminated by the following method:
- a notch or channel is obtained for the entire length of the sill or threshold;
- an insulating material is inserted into the notch or channel, in such a way as to create a thermal cutting that interrupts the thermal conductivity inside the sill or threshold by "cutting", and therefore interrupts the flow of heat in correspondence with the notch or channel.
- a pad of insulating material is applied on the sill or threshold, and
- an additional panel of about 3 cm is applied over the insulating pad, acting as a new sill.

Such a solution is impaired by the fact that it is complex and dangerous as it involves the use of machinery with blades (such as grinders) to obtain the notch or channel on the sill or threshold.

In addition, such a solution is additionally impaired by the thickness (not less than 4 cm) of the package composed of insulating pad and panel. Such a high thickness may occlude the anti-condensation gaps obtained on the frame to allow the passage of air in the gaps between the window panes, thus preventing condensation from being generated. The occlusion of such gaps prevents the passage of air between the window panes with the consequent possible generation of condensation in the window.

On the other hand, as regards the intrados composed of side walls and upper wall, its insulation requires an operator to perform the following operations
- apply an insulating material, such as polystyrene or aerogel, on the walls;
- apply a net over the insulating material; and
- cover the net with plaster.

Such a solution is extremely time-consuming. Moreover, the intervention of the operator obviously affects the repeatability in terms of accuracy and quality, since errors are possible that can compromise the final result.

US2012019024A1 discloses a multilayer panel used as side of a body of a truck.

KR101801560B1 discloses a multilayer panel used as insulation panel for bodies of trucks or vehicles.

EP2275636A2 discloses a door or window frame comprising three or four sections provided with a central multilayer core. The central core comprises a first layer of polyurethan foam and a second layer of rigid polyurethane foam.

US2009311932A1 discloses an insulated panel for building structures comprising a pair of parallel rigid skins comprising rock-based fibers with binder material and a core material layer of expanded polymeric material disposed between the two skins.

It is an object of the present invention to devise a multilayer insulating item that is effective and extremely quick and easy to install, which does not require to change or modify an existing window frame.

A further purpose of the present invention is to devise a multilayer insulating item that is efficient in terms of insulation and also extremely resistant to external weather agents.

These purposes are achieved in accordance with the invention with the features listed in the appended independent claim 1.

Advantageous embodiments appear from the dependent claims.

The multilayer item according to the invention is defined by claim 1.

For the sake of explanatory clarity, the description of the multilayer item according to the invention is continued with reference to the attached drawings, which have only illustrative and non-limiting value, wherein:
Fig. 1 is a sectional view illustrating a first embodiment of the multilayer item according to the invention;
Fig. 2 is the same as Fig. 1, wherein a protective layer is applied to the side of the item that is suitable for being visible;
Fig. 3 is a sectional view of a second embodiment of the multilayer item according to the invention;
Fig. 4 is a perspective view illustrating four multilayer items according to the invention, wherein one item is used as threshold/sill cover, and the other three items are used as wall cover of an intrados cover;
Fig. 5 is a front view illustrating an opening in a wall of a building wherein a single multilayer item according to the invention used as threshold/sill cover is disposed on the threshold or sill of the opening;
Fig. 6 is a front view illustrating an opening of a wall of a building wherein the four multilayer items shown in Fig. 4 are applied.
Fig. 7 is an axonometric view of a multilayer item according to the invention used as threshold cover;
Fig. 8 is a sectional view of the multilayer item used as threshold cover of Fig. 7;
Fig. 9 is an axonometric view of a multilayer item according to the invention used as wall cover of an intrados cover;
Fig. 10 is a sectional view of the multilayer item used as wall cover of Fig. 9.

With reference to the attached figures, a multilayer item according to the invention is described, it being generally indicated by the reference letter M.

The multilayer item (M) is suitable for being used as a wall cover for the thermal insulation of a wall.

In particular, the item (M) is suitable for being used in the opening of frames where windows or doors are applied, in order to cover the walls of the opening defined by thresholds, sills and intrados, to insulate said openings and avoid thermal bridging phenomena in correspondence with the openings.

An opening of a frame comprises a threshold or a sill that inferiorly defines the opening and an intrados that laterally and superiorly defines the opening. The intrados comprises two side walls and one upper wall.

In particular, the multilayer item (M) is used as threshold/sill cover (100) to cover the threshold/sill of an opening of a frame, or as a wall cover (100') to cover a wall of the intrados of the opening of the frame.

The multilayer item (M) comprises an external side (101) suitable for being visible and an internal side (102) suitable for facing the wall to be covered.

The multilayer item (M) comprises a base package (B1) comprising:
- a polyurethane panel (1) comprising a first side (1a) and a second side (1b);
- a fiber sheet (2) comprising a first side (2a) and a second side (2b) facing the polyurethane panel (1);
- an intermediate resin layer (30) interposed between the first side (1a) of the polyurethane panel (1) and the second side (2a) of the fiber sheet (2) to connect the polyurethane panel (1) and the fiber sheet (2);
- a first resin layer (31) applied on the first side (2a) of the fiber sheet (2);
- a second resin layer (32) applied on the second side (1b) of the polyurethane panel (1).

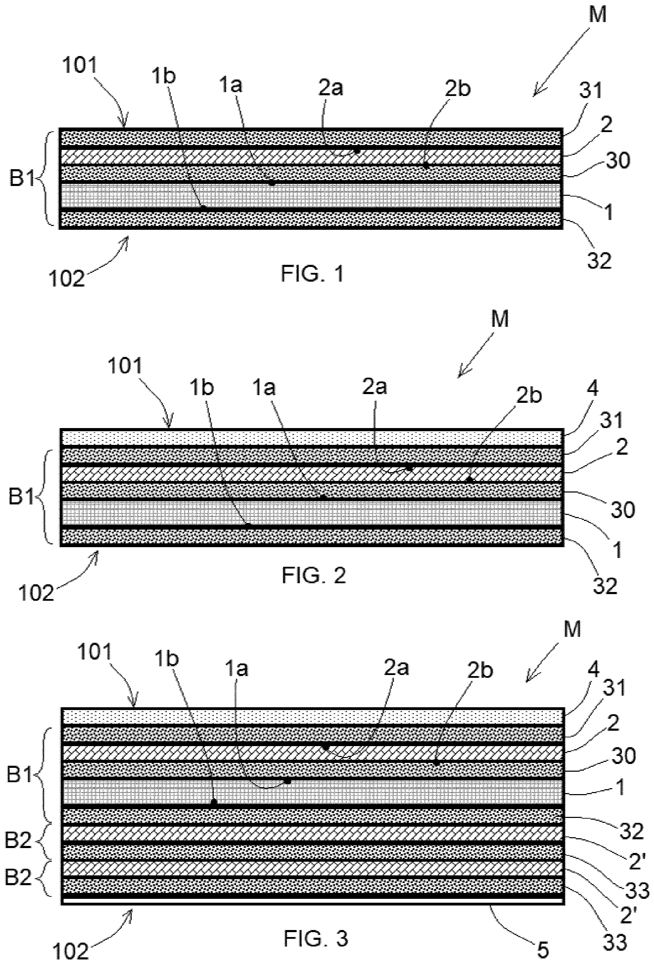

In the embodiment shown in Fig. 3, the multilayer item (M) further comprises two additional packages (B2) applied to the second resin layer (32). Each additional package (B2) includes a fiber sheet (2') and a resin layer (33).

Although only two additional packages (B2) are shown in Fig. 3, the multilayer item (M) may comprise any number of additional packages (B2). As the number of additional packages (B2) increases, the mechanical performance and the thickness of the multilayer item (M) will increase.

Preferably, the resin layers (30, 31, 32, 33) are epoxy resin layers.

In case the multilayer item (M) is applied for example on a threshold of a door, and is therefore suitable for being walked over by users, such multilayer item will have to be resistant to the loads caused by the passage of users over the multilayer item (M).

In order to increase the mechanical strength of the multilayer item (M), in addition to adding the aforementioned additional packages (B2), it is possible to foresee that at least one layer of resin (30, 31, 32, 33) comprises marble dust.

In addition to making the multilayer item (M) more resistant, the marble dust makes the item (M) self-extinguishing, that is, it makes it capable of preventing the spread of flames in case of fire.

Therefore the use of marble dust makes the multilayer item advantageous both in terms of mechanical strength and advantages in terms of safety in the event of fire.

Preferably, the marble dust has a particle size comprised between 0.12µm and 0.13µm and a weight percentage comprised between 55% and 60% with respect to the weight of the resin.

The particle size range and the weight percentage of the marble dust were decided after performing numerous experimental tests in order to obtain the best compromise between mechanical strength, weight of the multilayer item (M) and self-extinguishing properties.

In addition to marble dust, in order to increase the mechanical performance of the multilayer item (M) it is possible to provide the multilayer item also with stiffening panels (not shown in the attached figures), interposed between two fiber sheets (2') or between a fiber sheet (2, 2') and the polyurethane panel (1). By way of example, said stiffening panels may consist of panels made of PVC or Coremat, which is a non-woven based on polyester fibers that contains microspheres.

The polyurethane panel (1) is the element that acts as insulator for the multilayer item (M). The polyurethane panel (1) is a closed-cell rigid polyurethane panel that, compared to other insulating materials (such as wood wool, rock wool, polyester and the like), provides a better thermal and acoustic insulation with the same thickness.

In addition, the closed-cell polyurethane panel (1) also ensures high durability, lightness, high mechanical properties and dimensional stability at high and low temperatures, and also generates a continuous layer without thermal bridges.

Advantageously, the polyurethane panel (1) has a thickness comprised between 8 mm and 30 mm. Preferably, the polyurethane panel (1) has a density comprised between 50 Kg/m³ and 60 K g/m³.

The fiber sheets (2, 2') act as skeleton (framework structure) for the multilayer item (100, 100'). Advantageously, the fiber sheets (2, 2') are made of glass fiber with a density comprised between 400 g/m² to 500 g/m², preferably 450 g/m².

Although in the preferred embodiment of the invention said fiber sheets (2) are made of glass fibers, in alternative embodiments of the invention said fiber sheets (2) may also be made of carbon, Kevlar or similar materials.

As it is known, epoxy resins are impaired by a poor resistance to external weather agents, especially to UV rays, which make the epoxy resin yellow and flake over time. Precisely to avoid such yellowing and flaking phenomena, the multilayer item (M) comprises a protective layer (4) applied on the external side (101) of the multilayer item (M), or applied on the second resin layer (31) of the base package (B1) of the multilayer item (M). The protective layer (4) is suitable for covering and protecting said second resin layer (31) from the external weather agents. Preferably, the protective layer (4) is made of Gelcoat, which is a commercially available product.

Dyes can be added to the protective layer (4) in such a way that the external color of the multilayer item (M) can be customized as desired.

Advantageously, a layer of dye (5) can also be applied to the internal side (102) of the multilayer item (M) so that the resin layer (33), which is intended to remain non-visible, can also be colored.

Numerous experimental tests were performed by the applicant on the item according to the invention. In particular, the experimental tests were performed on a multilayer item (M) made as shown in Fig. 3, i.e. comprising the base package (B1), the two additional packages (B2) and the protective layer (4).

The experimental tests showed that the multilayer item (M) has:
- a thermal conductivity coefficient comprised between 0.020 W/mk and 0.024 W/mk;
- a noise attenuation ranging between 26 Db and 28 Db; and
- a thermal resistance comprised between 0.85 K/W and 0.95 K/W.

The multilayer item (M) was devised in particular for being applied in an opening (F) for (window or door) frames of a wall (P) of a building.

In particular, the multilayer item (M) was devised for being used as threshold/sill cover (100) and/or as wall cover (100') of a wall of an intrados.

The threshold/sill cover (100) is applied with glue or similar products to the threshold or sill of the opening of the frame.

The wall cover (100') of the wall of the intrados is applied on the wall of an intrados of the opening of the frame.

The wall-covers (100') of the wall of the intrados and the threshold/sill cover (100) have the same structure and layers as the multilayer item (M) described above; therefore, for economy of description, the description of the layers and components that make up said wall-cover (100') and said threshold/sill cover (100) will be omitted.

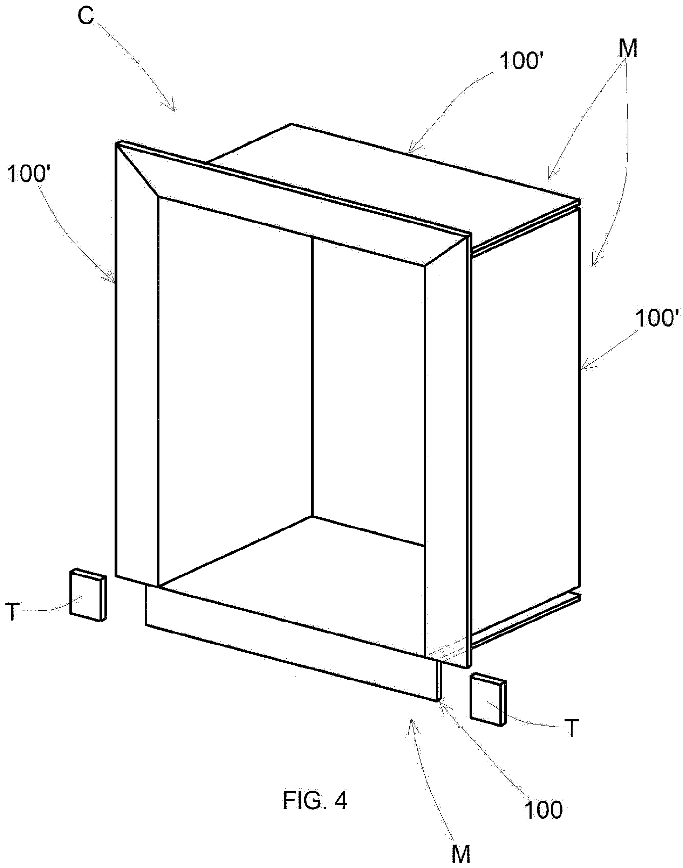

With reference to Fig. 4, a frame (C) comprising a threshold/sill cover (100) and three wall covers (100') is shown.

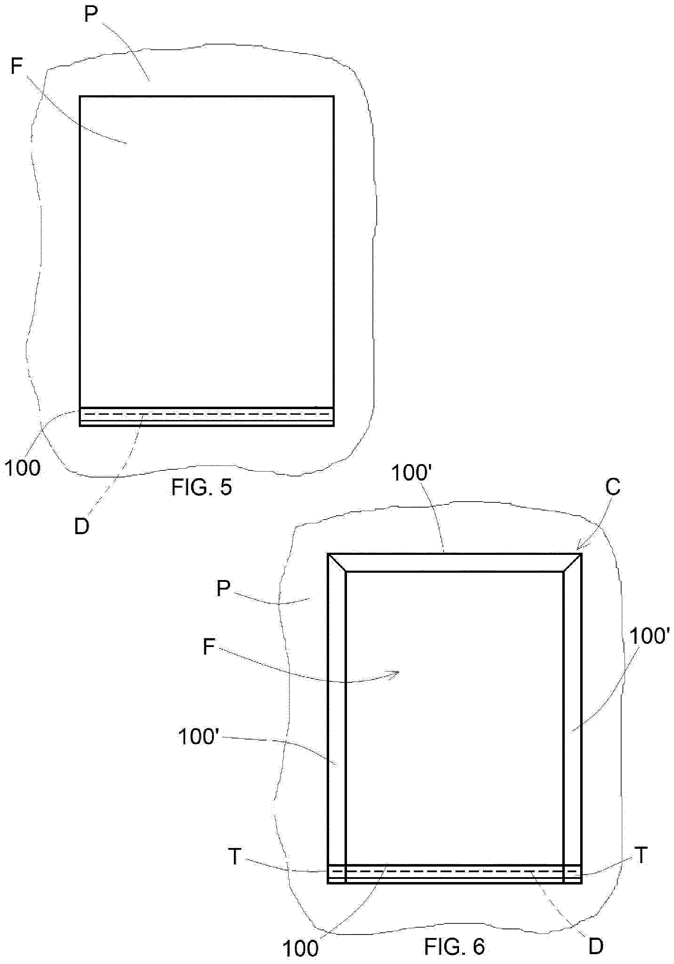

Fig. 5 shows only the threshold/sill cover covering the threshold or sill (D) of the opening (F) of the frame.

Referring to Fig. 6, the threshold/sill cover (100) and the wall covers (100') covering the threshold or sill (D) of the opening (F) of the frame and the walls of the intrados of the opening of the frame are shown, respectively.

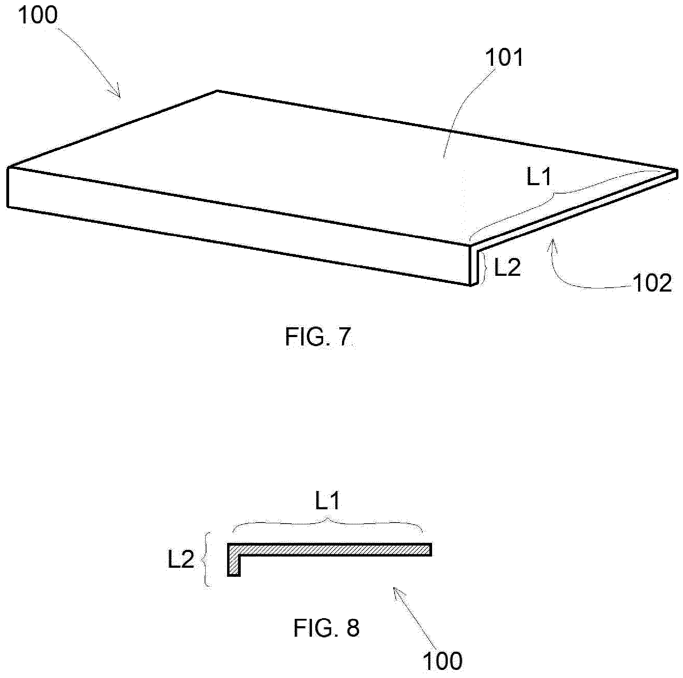

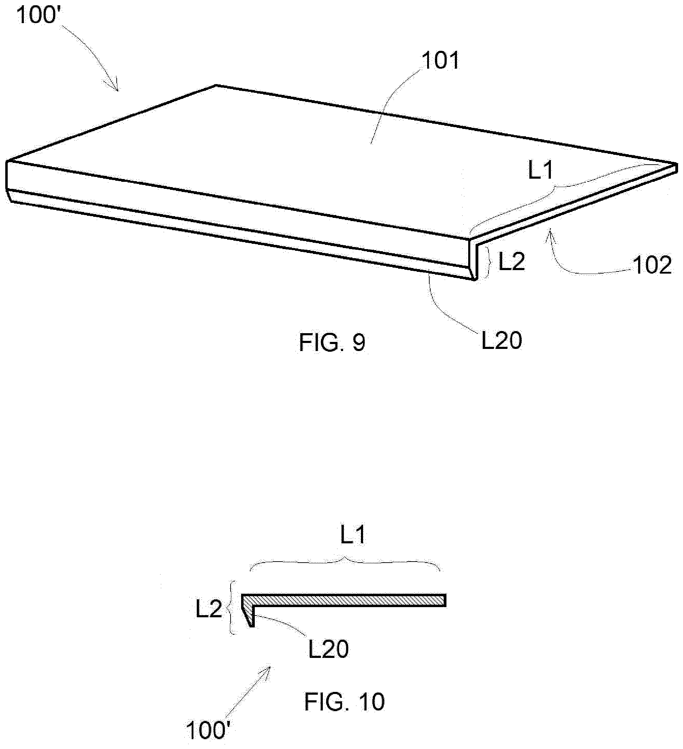

With reference to Figs. 7 to 10, when seen in cross-section, both the threshold/sill cover (100) and the wall cover (100') have an "L" shape comprising a first wing (L1) and a second wing (L2).

With reference to Fig. 6, end pieces (T) may be applied to the sides of the threshold/sill cover (100) to close the angular portion between the lateral wall covers (100') and the threshold/sill cover (100). The end piece (T) is made of the same components and the same layers as the multilayer item (M).

The wall covers (100') suitable for being applied on the walls of the intrados differ from the threshold/sill cover (100) suitable for being applied on the sill (D) or threshold, in that the wall covers comprise a sloping section (L20), at a free end of the second wing (L2), suitable for conveying rainwater towards the outside of the opening (F).

A method for making a multilayer item (M) according to the invention is described below.

A mold is prepared, comprising a cavity shaped with a profile identical to that of the external side (101) of the multilayer item (M).

A release agent is applied, by brush or spray gun, on the shaped cavity of the mold.

A protective product (preferably Gelcoat) is introduced into the cavity of the mold, above the release product, to form the protective layer (4). Also in such a case, the protective product can be applied either by spraying or with a brush.

It is necessary to wait a preset time for the protective product to solidify and polymerize, generating the protective layer (4). The mold is heated in order to speed up the polymerization of the protective product. The heat can be provided through special heating means or by placing the mold in a special oven.

Once the protective layer (4) is generated, a resin is introduced into the cavity of the mold and is applied over the protective layer (4) so as to make the first resin layer (31). Then, a fiber sheet (2), preferably a glass fiber sheet, is applied on the first resin layer (31) so that the fibers are impregnated with the resin of the first resin layer (31).

Then, additional resin is applied on the fiber sheet (2) to generate the intermediate resin layer (30). The polyurethane panel (1) is applied on the intermediate resin layer (30). Additional resin is applied on the polyurethane panel (1) so as to generate the second resin layer (32). Subsequently, additional fiber sheets (2') and resin layers (33) can be applied.

At least one of the applied resin layers (31, 30, 32, 33) comprises marble dust.

If necessary, stiffening panels may be applied between two fiber sheets (2') or between a fiber sheet (2, 2') and the polyurethane panel (1).

Finally, a preset time is waited for the resin layers to polymerize, thus obtaining the multilayer item (M). Also in this case, heat is supplied to the mold in order to speed up polymerization. Heat can be provided by means of said heating means or by placing the mold in a special oven.

A vacuum bag or membrane press can be used to compact the fiber sheets (2, 2') and the polyurethane panel (1).

In this case, plastic film is fixed tightly to the edges of the mold over the layers of the item. The mold comprises an opening for the suction of air so that a vacuum can be generated between the shaped cavity of the mold and the plastic film.

Simultaneously with the heating of the mold, air is extracted from the opening of the mold, so that the plastic film presses the fibers and the polyurethane panel against the shaped surface of the mold in such a way that the fiber sheets and the polyurethane panel are compact with each other. In this way, the volume content of air bubbles inside the multilayer item (M) is reduced. In fact, air bubbles are defects that compromise the mechanical performance of the multilayer item (M) because they can cause the ungluing between adjacent layers and the breaking of the multilayer item (M).

Once the multilayer item (M) is obtained, it is extracted from the cavity of the mold and cut to size according to the specific requirements.

The protective product is applied in correspondence with the cut edges of the multilayer item. In such a case it is necessary to wait for the protective product applied on the edges of the item to polymerize.

Finally, in order to install the multilayer item (M) on the walls or on the sill (D) of the opening (F) of the frame, it will be necessary to apply adhesive means, such as two-component glues, silicones or polyurethane foams, on the internal side (102) of the multilayer item (M).

The multilayer item (M) allows to isolate and effectively insulate an opening (F) in an extremely simple and fast way. In fact, an operator will have to apply an adhesive on the internal side (102) of the multilayer item (M) and lay and press said multilayer item (M) against the wall of the intrados or against the sill (D) or the threshold of the opening (F).

The coupling of the fiber sheets (2, 2') with the polyurethane panel (1) gives the multilayer item (M) high mechanical and insulating properties, while maintaining a limited thickness of the item. In fact, the applicant ascertained that, thanks to the solution adopted, it is possible to produce efficient items (100, 100') with a thickness of 8 mm. Such a low thickness makes the multilayer item (100, 100') applicable on any window sill or threshold without the risk of occluding the anti-condensation gap of the frames, which was instead occluded in the solutions adopted in the prior art.

Numerous variations and detailed modifications can be made to the present embodiments of the invention, within the reach of a skilled person in the art, but within the scope of the invention as expressed by the appended claims.

## Claims

1. Multilayer item (M) for thermal insulation of a wall; said multilayer item (M) comprising an external side (101) suitable for being visible, and an internal side (102) suitable for facing the wall to be coated; said multilayer item (M) comprising a base pack (B1) comprising:
- a polyurethane panel (1) comprising a first side (1a) and a second side (1b);
- a fiber sheet (2) comprising a first side (2a) and a second side (2b) facing the polyurethane panel (1);
- an intermediate resin layer (30) disposed between the first side (1a) of the polyurethane panel (1) and the second side (2a) of the fiber sheet (2) to connect the polyurethane panel (1) with the fiber sheet (2);
- a first resin layer (31) applied on the first side (2a) of the fiber sheet (2);
- a second resin layer (32) applied on the second side (1b) of the polyurethane panel (1);
**characterized in that**
at least one of said resin layers (30, 31, 32) comprises marble dust.

2. The multilayer item (M) according to claim 1, said at least one resin layer comprising marble dust contains marble power having a particle size comprised between 0.12µm and 0.13µm and a weight percentage comprised between 55% and 60% with respect to the weight of the resin.

3. The multilayer item (M) according to claim 1 or 2, comprising at least one additional pack (B2) applied on the second resin layer (32); wherein said additional pack (B2) comprises:
- a fiber sheet (2'); and
- a resin layer (33).

4. The multilayer item (M) according to any one of the preceding claims, wherein said fiber sheet (2, 2') is a glass fiber sheet having a density comprised between 400 gr/m² and 500 gr/m², preferably 450 gr/m².

5. Threshold/sill cover (100) suitable for being applied on a threshold or a sill (D) of a compartment of a frame for thermally insulating said threshold or sill (D); said threshold/sill cover (100) comprising an external side (101) suitable for being visible and an internal side (102) suitable for facing the threshold/sill to be covered; said threshold/sill cover (100) comprising a base package (B1) comprising:
- a polyurethane panel (1) comprising a first side (1a) and a second side (1b);
- a fiber sheet (2) comprising a first side (2a) and a second side (2b) facing the polyurethane panel (1);
- an intermediate resin layer (30) interposed between the first side (1a) of the polyurethane panel (1) and the second side (2a) of the fiber sheet (2) to connect the polyurethane panel (1) and the fiber sheet (2);
- a first resin layer (31) applied to the first side (2a) of the fiber sheet (2);
- a second resin layer (32) applied to the second side (1b) of the polyurethane panel (1).

6. The threshold/sill cover (100) according to claim 5, wherein at least one of said resin layers (30, 31, 32) comprises marble dust.

7. The threshold/sill cover (100) according to claim 6, wherein said at least one resin layer comprising marble dust contains marble dust having a particle size comprised between 0.12µm and 0.13µm and a weight percentage comprised between 55% and 60% relative to the weight of the resin.

8. The threshold/sill cover (100) according to any one of claims 5 to 7, comprising at least one additional package (B2) applied to the second resin layer (32), wherein said additional package (B2) comprises:
- a fiber sheet (2'); and
- a resin layer (33).

9. The threshold/sill cover (100) according to any one of claims 5 to 8, wherein said threshold/sill cover (100) has an "L" shape in cross-section, comprising a first wing (L1) and a second wing (L2).

10. Wall cover (100') suitable for being applied on a wall of an intrados of an opening of a frame for thermally insulating said wall; said wall cover (100') comprising an external side (101) suitable for being visible and an internal side (102) suitable for facing the wall of the intrados to be covered; said wall cover (100') comprising a base package (B1) comprising:
- a polyurethane panel (1) comprising a first side (1a) and a second side (1b);
- a fiber sheet (2) comprising a first side (2a) and a second side (2b) facing the polyurethane panel (1);
- an intermediate resin layer (30) interposed between the first side (1a) of the polyurethane panel (1) and the second side (2a) of the fiber sheet (2) to connect the polyurethane panel (1) and the fiber sheet (2);
- a first resin layer (31) applied on the first side (2a) of the fiber sheet (2);
- a second resin layer (32) applied on the second side (1b) of the polyurethane panel (1).

11. The wall cover (100') according to claim 10, wherein at least one of said resin layers (30, 31, 32) comprises marble dust.

12. The wall cover (100') according to claim 11, wherein said at least one resin layer comprising marble dust contains marble dust having a particle size comprised between 0.12µm and 0.13µm and a weight percentage comprised between 55% and 60% relative to the weight of the resin.

13. The wall cover (100') according to any one of claims 10 to 12, comprising at least one additional package (B2) applied on the second resin layer (32), wherein said additional package (B2) comprises:
- a fiber sheet (2'); and
- a resin layer (33).

14. The wall cover (100') according to any one of claims 10 to 13, wherein said sill/sill cover (100) has an "L" shape in cross-section, comprising a first wing (L1) and a second wing (L2).
